# EUROPEAN PATENT APPLICATION

(11) **EP 4 523 782 A1**
(43) Date of publication of application: **19.03.2025**
(21) Application number: 23803566.1
(22) Date of filing: 10.05.2023
(51) Int. Cl.: B01D 71/02, B01D 53/22, B01D 69/10, B01D 69/12, C01C 3/11, C01C 3/12

(54) **AMMONIA SEPARATION MEMBRANE AND METHOD FOR SEPARATING AMMONIA USING SAME**

(30) Priority: 11.05.2022 JP 2022078202
(71) Applicant: National Institute of Advanced Industrial Science and Technology, Chiyoda-ku Tokyo 100-8921 (JP); Sumitomo Chemical Company, Limited, Tokyo 103-6020 (JP)
(72) Inventor: TAKAHASHI, Akira, Tsukuba-shi, Ibaraki 305-8560 (JP); KAWAMOTO, Tohru, Tsukuba-shi, Ibaraki 305-8560 (JP); NASU, Tomomichi, Tsukuba-shi, Ibaraki 300-3294 (JP); SADAOKA, Kazuo, Niihama-shi, Ehime 792-8521 (JP); BETCHAKU, Mii, Niihama-shi, Ehime 792-8521 (JP)
(74) Representative: Vossius & Partner Patentanwälte Rechtsanwälte mbB
(86) International application number: PCT/JP2023/017503
(87) International publication number: WO 2023/219091

(57) **Abstract**

An object of the present invention is to provide an ammonia separation membrane having a composition different from those of conventional ammonia separation membranes and an ammonia separation method using the ammonia separation membrane. The present invention is an ammonia separation membrane comprising a metal cyanocomplex represented by the following formula (1) and an oxide porous body, wherein
a pore shape of the oxide porous body is irregular,

AₓM¹[M²(CN)_{w}]_{y}·zH₂O (1)

where
M¹ and M² represent metal atoms such as vanadium, A represents atoms such as hydrogen, x represents a number from 0 to 4, y represents a number from 0.1 to 2, z represents a number from 0 to 6, and w represents a number from 4 to 8.

## Description

### TECHNICAL FIELD

The present invention relates to an ammonia separation membrane and an ammonia separation method using the ammonia separation membrane.

### BACKGROUND ART

Ammonia is required to be managed in various fields. For example, there is a need to remove ammonia as an impurity in semiconductor manufacturing and fuel cells, and there is also a need to separate produced ammonia from a mixed gas of the produced ammonia and raw material gases in the Haber-Bosch method which is a method for synthesizing ammonia from nitrogen and hydrogen.

For example, Patent Literature 1 describes a method for separating ammonia by selectively passing ammonia gas from a mixed gas containing at least ammonia gas, hydrogen gas, and nitrogen gas using a zeolite membrane. In addition, Patent Literature 2 discloses an ammonia separation method including a membrane separation step of separating at least one component of hydrogen, nitrogen, and ammonia using a gas separation membrane in which a silica-containing layer is laminated on a ceramic base material.

### CITATION LIST

### PATENT LITERATURE

- Patent literature 1:: International Publication No. WO2018/230737
- Patent literature 2:: Japanese Laid-Open Patent Publication No. 2008-247654

### SUMMARY OF THE INVENTION

### PROBLEMS TO BE SOLVED BY THE INVENTION

An object of the present invention is to provide an ammonia separation membrane having a composition different from those of conventional ammonia separation membranes such as those of Patent Literatures 1 and 2, and an ammonia separation method using the ammonia separation membrane.

### SOLUTION TO THE PROBLEMS

The present invention that can achieve the problem is as follows.
[1] An ammonia separation membrane comprising a metal cyanocomplex represented by the following formula (1) and an oxide porous body, wherein
   a pore shape of the oxide porous body is irregular,

      AₓM¹[M²(CN)_{w}]_{y}·zH₂O (1)
   where
   M¹ represents one or more metal atoms selected from the group consisting of vanadium, chromium, manganese, iron, ruthenium, cobalt, rhodium, nickel, palladium, platinum, copper, silver, zinc, lanthanum, europium, gadolinium, lutetium, barium, strontium, and calcium,
   M² represents one or more metal atoms selected from the group consisting of vanadium, chromium, molybdenum, tungsten, manganese, iron, ruthenium, cobalt, nickel, platinum, and copper,
   A represents one or more atoms selected from the group consisting of hydrogen, lithium, sodium, potassium, rubidium, cesium, and ammonium, and
   x represents a number from 0 to 4, y represents a number from 0.1 to 2, z represents a number from 0 to 6, and w represents a number from 4 to 8.
[2] The ammonia separation membrane according to [1], wherein the oxide porous body has two or more layers having different pore diameters.
[3] The ammonia separation membrane according to [1] or [2], wherein
   the oxide porous body has two or more layers having different pore diameters, and
   the metal cyanocomplex is formed inside a layer (S1) having a smallest average pore diameter and/or adjacent to the layer (S1).
[4] The ammonia separation membrane according to any one of [1] to [3], wherein an outermost layer on one side of the oxide porous body is a layer (S1) having a smallest average pore diameter.
[5] The ammonia separation membrane according to any one of [1] to [4], wherein a layer (S1) having a smallest average pore diameter has an average pore diameter of 0.5 µm or less.
[6] The ammonia separation membrane according to any one of [1] to [5], wherein the metal cyanocomplex is formed inside a layer, of the oxide porous body, having an average pore diameter of 0.5 µm or less and/or on a surface of a layer having an average pore diameter of 0.5 µm or less.
[7] A method for producing an ammonia separation membrane having a metal cyanocomplex represented by the following formula (1) and an oxide porous body, wherein
   the oxide porous body has an irregular pore shape and has two or more layers having different pore diameters, and
   the method comprises:
      an impregnation step of impregnating at least a layer (S1) having a smallest average pore diameter or a layer having an average pore diameter of 0.5 µm or less in the oxide porous body with one of an aqueous solution Sa containing Aₚ[M²(CN)_{w}] (where A represents one or more atoms selected from the group consisting of hydrogen, lithium, sodium, potassium, rubidium, cesium, and ammonium, M² represents one or more metal atoms selected from the group consisting of vanadium, chromium, molybdenum, tungsten, manganese, iron, ruthenium, cobalt, nickel, platinum, and copper, p represents a number from 1 to 4, and w represents a number from 4 to 8) and a solution Sb of a hydrophobic solvent containing M¹ which is one or more metals selected from the group consisting of vanadium, chromium, manganese, iron, ruthenium, cobalt, rhodium, nickel, palladium, platinum, copper, silver, zinc, lanthanum, europium, gadolinium, lutetium, barium, strontium, and calcium; and
      a step of bringing a solution other than the solution used in the impregnation step, out of the aqueous solution Sa and the solution Sb, into contact with the layer (S1) having the smallest average pore diameter or the layer having an average pore diameter of 0.5 µm or less, of the oxide porous body, impregnated with one of the aqueous solution Sa and the solution Sb in the impregnation step,

         AₓM¹[M²(CN)_{w}]_{y}·zH₂O (1),
   where A, M¹, M², and w are the same as above, x represents a number from 0 to 4, y represents a number from 0.1 to 2, and z represents a number from 0 to 6.
[8] A method for producing an ammonia separation membrane having a metal cyanocomplex represented by the following formula (1') and an oxide porous body, wherein
   the oxide porous body has an irregular pore shape and has two or more layers having different pore diameters, and
   the method comprises:
      a step of impregnating at least a layer (S1) having a smallest average pore diameter or a layer having an average pore diameter of 0.5 µm or less in the oxide porous body with an aqueous solution of a metal cyanocomplex represented by Fe³⁺[Fe³⁺(CN)₆]; and
      a step of performing reduction treatment on the oxide porous body impregnated with the aqueous solution of the metal cyanocomplex Fe³⁺[Fe³⁺(CN)₆],

         AₓM¹¹[M²¹(CN)₆]_{y}·zH₂O (1'),
   where A represents one or more atoms selected from the group consisting of hydrogen, lithium, sodium, potassium, rubidium, cesium, and ammonium, M¹¹ and M²¹ are iron(III), x represents a number from 0 to 4, y represent a number from 0.1 to 2, and z represents a number from 0 to 6.
[9] The method according to [8], wherein the reduction treatment is treatment in a reducing gas atmosphere.
[10] The method according to [8], wherein the reduction treatment is treatment by light.
[11] An ammonia separation method of selectively passing ammonia through the ammonia separation membrane according to any one of [1] to [6] from a mixed gas containing ammonia.

### ADVANTAGEOUS EFFECTS OF THE INVENTION

According to the present invention, it is possible to provide an ammonia separation membrane having a composition different from those of Patent Literatures 1 and 2, and an ammonia separation method using the ammonia separation membrane. In addition, the present invention has the favorable advantage that the ammonia separation membrane can be produced, with fewer processes in the production of the separation membrane than in Patent Literatures 1 and 2, using safe materials, or the ammonia separation membrane can be easily produced; for example, heating is not required, the energy cost can be reduced, and the like.

### BRIEF DESCRIPTION OF THE DRAWINGS

[FIG. 1] FIG. 1 is a schematic diagram representing the crystal structure of a metal cyanocomplex.
[FIG. 2] FIG. 2 shows a photograph as a substitute for a drawing, showing a cross-sectional TEM image of an ammonia separation membrane of Example 1.
[FIG. 3] FIG. 3 shows a photograph as a substitute for a drawing, showing a cross-sectional TEM image of an ammonia separation membrane of Example 2.
[FIG. 4] FIG. 4 shows a photograph as a substitute for a drawing, showing a cross-sectional TEM image of an ammonia separation membrane whose raw materials are the same as in Example 1.
[FIG. 5] FIG. 5 is a diagram showing the results of analyzing a cross-section of an ammonia separation membrane of Example 4 using an EPMA.

### DESCRIPTION OF EMBODIMENTS

### 1. Ammonia separation membrane

The ammonia separation membrane of the present invention is an oxide porous body in which a metal cyanocomplex represented by a predetermined formula is formed, and the pore shape of the oxide porous body is irregular. Hereinafter, the oxide porous body and the metal cyanocomplex will be described.

### 1-1. Oxide porous body

The ammonia separation membrane of the present invention has an oxide porous body and a metal cyanocomplex, and preferably, the metal cyanocomplex is formed at least a part of the oxide porous body. The oxide of the porous body is preferably a metal oxide, specific examples of the oxide include B₂O₃, SiO₂, GeO₂, Al₂O₃, V₂O₅, As₂O₅, Sb₂O₅, ZrO₂, TiO₂, ZnO, PbO, ThO₂, BeO, CdO, Ta₂O₅, Nb₂O₅, WO₃, ScO₂, La₂O₃, Y₂O₃, SnO₂, Ga₂O₃, In₂O₃, PbO₂, MgO, Li₂O, BaO, CaO, SrO, Na₂O, K₂O, Rb₂O, HgO, Cs₂O, Ag₂O, TeO₂, Tl₂O, and Cr₂O₃, and it is preferable that at least one of these oxides is included. The oxide porous body preferably includes at least Al₂O₃. In the present invention, the term "metal" is used to mean to include semimetals such as Si and Ge.

The oxide porous body may be composed of a single layer, or may have two or more layers having different pore diameters. It is preferable that the oxide porous body has two or more layers having different pore diameters.

In the oxide porous body, it is preferable that the metal cyanocomplex is formed at a layer having a small pore diameter, and by so forming the metal cyanocomplex, the metal cyanocomplex can be formed densely, so that the ammonia separation performance can be good. From such a viewpoint, it is preferable that the metal cyanocomplex is formed at a layer, of the oxide porous body, having an average pore diameter of 0.5 µm or less. The metal cyanocomplex being formed at the layer having an average pore diameter of 0.5 µm or less includes the metal cyanocomplex being formed inside and/or adjacent to this layer. As for the metal cyanocomplex being formed adjacent to the layer having an average pore diameter of 0.5 µm or less, the metal cyanocomplex may be formed in contact with at least either surface of this layer, or the metal cyanocomplex may be formed in contact with a surface treatment layer formed on at least either surface of this layer, and it is preferable that the metal cyanocomplex is formed in contact with at least either surface of this layer. In this case, in the case where the oxide porous body is formed of one layer, the average pore diameter of the oxide porous body may be 0.5 µm or less, and in the case where the oxide porous body has two or more layers having different pore diameters, it is preferable that the oxide porous body has at least one layer having an average pore diameter of 0.5 µm or less and the metal cyanocomplex is formed at the at least one layer having an average pore diameter of 0.5 µm or less. The average pore diameter of the layer at which the metal cyanocomplex is formed is preferably 0.3 µm or less, and the lower limit of the average pore diameter of the layer at which the metal cyanocomplex is formed may be, for example, 0.001 µm or more.

In addition, in the case where the oxide porous body has two or more layers having different pore diameters, it is also preferable that the metal cyanocomplex is formed inside a layer (S1) having the smallest average pore diameter and/or adjacent to the layer (S1). As for the metal cyanocomplex being formed adjacent to the layer (S1), the metal cyanocomplex may be formed in contact with at least either surface of the layer (S1), or the metal cyanocomplex may be formed in contact with a surface treatment layer formed on at least either surface of the layer (S1), and it is preferable that the metal cyanocomplex is formed in contact with at least either surface of this layer. Examples of the surface treatment layer include sodium hexacyanoferrate(II), potassium hexacyanoferrate(III), polyethyleneimine, and the like.

Furthermore, it is preferable that the layer (S1) having the smallest average pore diameter is an outermost layer on one side of the oxide porous body and the metal cyanocomplex is formed inside the layer (S1) and/or adjacent to the layer (S1). In this case, as for the metal cyanocomplex being formed adjacent to the layer (S1), the metal cyanocomplex may be formed in contact with the outer surface of the layer (S1), or the metal cyanocomplex may be formed via a surface treatment layer provided on the outer surface of the layer (S1).

The layer (S1) having the smallest average pore diameter preferably has the following average pore diameter, composition, and thickness, and it is preferable that these requirements are satisfied individually or in combination.

The average pore diameter of the layer (S1) is preferably 0.001 to 0.5 µm, more preferably 0.001 to 0.3 µm, further preferably 0.001 to 0.1 µm, and particularly preferably 0.001 to 0.05 µm. The average pore diameter of the layer (S1) can be measured by a capillary condensation method or a mercury intrusion method.

The layer (S1) is preferably at least one of Al₂O₃, ZrO₂, SiO₂, TiO₂, and Y₂O₃, more preferably at least one of γ-Al₂O₃, ZrO₂, SiO₂, and TiO₂, and further preferably γ-Al₂O₃.

The thickness of the layer (S1) is preferably 0.1 to 10 µm.

In addition, in the case where the oxide porous body has two or more layers having different pore diameters, the layer (S1) having the smallest average pore diameter is an outermost layer on one side of the oxide porous body, and the metal cyanocomplex is formed inside the layer (S1) and/or adjacent to the layer (S1), it is preferable that the two or more layers of the oxide porous body are arranged in order of the magnitude of the average pore diameter. That is, in this case, the layer (S1) having the smallest average pore diameter is an outermost layer on one side of the oxide porous body, and a layer having the largest average pore diameter (hereinafter referred to as layer (B1)) is an outermost layer on the other side of the oxide porous body.

An average pore diameter D_{B1} of the layer (B1) is, for example, 0.1 µm or more, preferably 1.0 µm or more, more preferably 1.5 µm or more, further preferably 5 µm or more, and even more preferably 7 µm or more, may be 300 µm or less, and is preferably 60 µm or less and more preferably 20 µm or less. That is, the average pore diameter D_{B1} is, for example, 0.1 to 300 µm, preferably 1.0 to 60 µm, more preferably 1.5 to 20 µm, further preferably 5 to 20 µm, and particularly preferably 7 to 20 µm. The average pore diameter D_{B1} can be measured, for example, by a mercury intrusion method.

The thickness of the layer (B1) is, for example, 0.1 to 5 mm, and is preferably 0.2 to 3 mm.

In addition, it is preferable that the layer (B1) contains α-Al₂O₃. In particular, it is preferable that the layer (B1) contains 50% or more of α-Al₂O₃, and it is more preferable that the layer (B1) contains 80% or more of α-Al₂O₃.

It is preferable that one or more layers are further included between the layer (S1) having the smallest average pore diameter and the layer (B1) having the largest average pore diameter.

A layer in direct contact with the layer (B1) (hereinafter referred to as layer (B2)) is specifically Al₂O₃, ZrO₂, SiO₂, TiO₂, Y₂O₃, or the like, preferably Al₂O₃, and more preferably α-Al₂O₃.

An average pore diameter D₂ of the layer (B2) in direct contact with the layer (B1) is, for example, 0.01 µm or more and 20 µm or less (0.01 to 20 µm), preferably 0.05 µm or more and 10 µm or less (0.05 to 10 µm), more preferably 0.1 µm or more and 5 µm or less (0.1 to 5 µm), and further preferably 0.15 µm to 5 µm.

The average pore diameter of a layer in direct contact with the surface on the layer (B1) side of the layer (S1) having the smallest average pore diameter is, for example, 0.01 µm to less than 0.15 µm and preferably more than 0.05 µm to 0.14 µm, it is preferable that this layer contains Al₂O₃, it is more preferable that this layer contains α-Al₂O₃, and it is further preferable that 80 mass% or more of the surface on the layer (S1) side of this layer is α-Al₂O₃.

The shape of the oxide porous body is not particularly limited, may be a flat shape, a cylindrical shape, a monolithic shape, or a honeycomb shape, and is preferably a cylindrical shape or a monolithic shape. An outermost layer in a honeycomb shape refers to an outermost layer in the internal pores of the honeycomb.

In addition, at least a part of the oxide porous body may have an irregular pore shape, and in the case where the oxide porous body has two or more layers having different pore diameters, it is preferable that the pore shape of the layer (S1) having the smallest average pore diameter is irregular or the pore shape of the layer having an average pore diameter of 0.5 µm or less is irregular. In the case where the oxide porous body has two or more layers having different pore diameters, it is more preferable that the metal cyanocomplex is formed at the layer (S1) having an irregular pore shape or the metal cyanocomplex is formed at the layer having an irregular pore shape and having an average pore diameter of 0.5 µm or less. In addition, it is preferable that the pores formed in an irregular shape are pores formed by a particle aggregate structure, and it is preferable that the pores are not straight through holes, that is, the pores having an irregular shape are each a pore whose inlet and outlet cannot be connected in a straight line.

### 1-2. Metal cyanocomplex

The metal cyanocomplex is represented by the following formula (1).

AₓM¹[M²(CN)_{w}]_{y}·zH₂O (1),

where
M¹ represents one or more metal atoms selected from the group consisting of vanadium, chromium, manganese, iron, ruthenium, cobalt, rhodium, nickel, palladium, platinum, copper, silver, zinc, lanthanum, europium, gadolinium, lutetium, barium, strontium, and calcium, and
M² represents one or more metal atoms selected from the group consisting of vanadium, chromium, molybdenum, tungsten, manganese, iron, ruthenium, cobalt, nickel, platinum, and copper,
A represents one or more atoms selected from the group consisting of hydrogen, lithium, sodium, potassium, rubidium, and cesium, and
x represents a number from 0 to 4, y represents a number from 0.1 to 2, z represents a number from 0 to 6, and w represents a number from 4 to 8.

The metal cyanocomplex may contain materials, such as a solvent other than water and other ions as impurities, which are not expressed in the composition, as impurities or binders.

If M¹ and M² are identified, the metal cyanocomplex is referred to as M¹-M² cyanide complex.

M¹ is more preferably one or more metal atoms selected from the group consisting of vanadium, chromium, manganese, iron, ruthenium, cobalt, nickel, copper, and zinc, further preferably one or more metal atoms selected from the group consisting of manganese, iron, cobalt, nickel, copper, and zinc, and even more preferably one or more metal atoms selected from the group consisting of iron (particularly iron(III)), zinc, and cobalt.

M² is preferably one or more metal atoms selected from the group consisting of manganese, iron, ruthenium, cobalt, and platinum, more preferably one or more metal atoms selected from the group consisting of iron and cobalt, and most preferably iron.

A is preferably one or more atoms selected from the group consisting of sodium, ammonium, rubidium, cesium, and potassium, and more preferably one or more of sodium and potassium.

x is preferably 0 to 2.5 and more preferably 0 to 2. x may be more than 0 and 2.5 or less, or may be more than 0 and 2 or less.

y is preferably 0.4 to 1.3 and more preferably 0.5 to 1.

If the value of y is small, it means that there is little [M²(CN)_{w}] in the crystal, and in this case, the metal M¹ is present in excess compared to [M²(CN)_{w}]. In this case, a structure in which a ligand is easily adsorbed around the metal M¹ is formed, and in particular, the amount of NH₃ adsorbed increases.

z is preferably 0.5 to 5.5 and more preferably 1 to 5.

The number of cyano groups to coordinate to M² is generally 6 (i.e., w is preferably 6), but some of these cyano groups may be substituted with nitro groups, or the like, and there is no problem if the number of cyano groups is 4 to 8, i.e., w is 4 to 8.

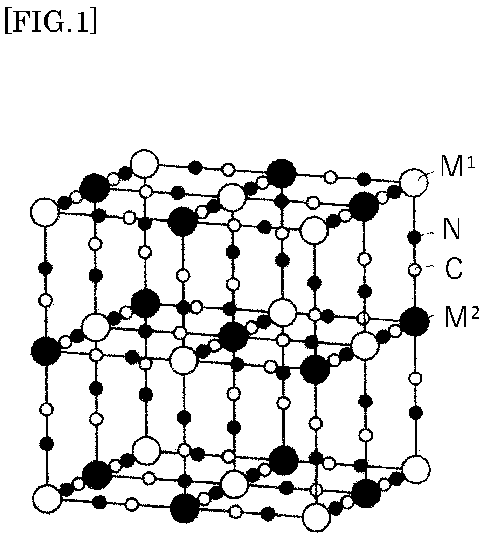

The crystal structure of the metal cyanocomplex is generally a face-centered cubic structure shown in FIG. 1, but is not necessarily limited thereto. In the metal cyanocomplex, NH₃ is easily coordinated and adsorbed to exposed metal portions. It can also be expected that NH₃ is adsorbed in void sites having a size of 1 nm or less and contained inside the metal cyanocomplex. These adsorptions do not significantly affect the crystal structure, and therefore significant volume changes due to adsorption and desorption are not caused.

### 2. Method for producing ammonia separation membrane

The method for producing the ammonia separation membrane of the present invention includes a step of producing an oxide porous body and a step of forming a metal cyanocomplex in the oxide porous body.

### 2-1. Step of producing oxide porous body

In the case where the oxide porous body is composed of one layer (B1), for example, a commercially available alumina base material containing alumina and SiO₂ can be used, and for example, alumina base materials A-12, A-13, A-16, and the like, manufactured by Hagi Glass can be used.

In the case where the oxide porous body is composed of two layers, it is preferable that the oxide porous body has the above-described commercially available alumina base material as a first porous layer, and a layer in contact with the first porous layer (second porous layer) on at least one surface of the first porous layer. By applying a slurry containing a commercially available metal oxide for forming the second porous layer and a solvent to at least one surface of the first porous layer and performing heat treatment at a temperature of about 500 to 1600°C for about 30 minutes to 10 hours, a laminate in which the first porous layer and the second porous layer are laminated can be obtained. In the case where the oxide porous body is composed of three or more layers, the step of applying the slurry containing the metal oxide and the solvent and performing the heat treatment may be repeated. The method for applying the slurry is not particularly limited, and examples thereof include a dip coating method, a spray coating method, a roll coating method, a bar coating method, a spin coating method, a slit coating method, brush application, and the like.

Examples of the solvent include water, organic solvents, or mixtures thereof. The concentration of the metal oxide in the slurry is, for example, 2 mass% or more and 15 mass% or less.

### 2-2. Step of forming metal cyanocomplex

### (Method 1)

A metal cyanocomplex can be produced by mixing an aqueous solution containing an anionic metal cyanocomplex (raw material for M²) having a metal atom M² as a central metal (aqueous solution in which salts of the raw material for M² are dissolved) and an aqueous solution containing a metal cation (raw material for M¹) of a metal atom M¹ (aqueous solution in which salts of the raw material for M¹ are dissolved), and the metal cyanocomplex can be formed on the surface of or inside the oxide porous body by supplying the raw material for M¹ from one main surface of the oxide porous body, supplying the raw material for M² from the other main surface of the oxide porous body, and bringing the raw material for M¹ and the raw material for M² into contact with each other to allow the raw material for M¹ and the raw material for M² to react on the surface of or inside the oxide porous body. After the raw material for M¹ and the raw material for M² are brought into contact with each other, it is preferable to keep the raw material for M¹ and the raw material for M² in contact for 30 seconds to 120 hours, for example, and then the oxide porous body may be taken out from the aqueous solution of the raw material for M¹ and the raw material for M², washed if necessary, and then dried.

With such a step of forming a metal cyanocomplex, the number of processes in the production of the separation membrane is small, the raw materials are highly safe, and heating is not required, so that the energy cost can be reduced and the production is simple.

The counter ions (cations that form salts with the raw material for M²) in the aqueous solution of the raw material for M² are not particularly limited, and examples thereof include hydrogen ions, lithium ions, sodium ions, potassium ions, rubidium ions, cesium ions, ammonium ions, and the like, potassium ions or sodium ions are preferable, and potassium ions are more preferable. In addition, the counter ions (anions that form salts with the raw material for M¹) in the aqueous solution of the M¹ raw material are also not particularly limited, and examples thereof include inorganic ions such as Cl⁻, NO³⁻, and SO₄²⁻.

The concentration of metal M² ions in the aqueous solution of the raw material for M² is preferably 0.05 mol/L or more, more preferably 0.1 mol/L or more, and further preferably 0.2 mol/L or more, and is preferably 1.5 mol/L or less, more preferably 1.2 mol/L or less, and further preferably 1.0 mol/L or less (that is, preferably 0.05 to 1.5 mol/L, more preferably 0.1 to 1.2 mol/L, and further preferably 0.2 to 1.0 mol/L).

The concentration of metal M¹ ions in the aqueous solution of the raw material for M¹ is preferably 0.0005 mol/L or more, more preferably 0.001 mol/L or more, and further preferably 0.05 mol/L or more, and is preferably 1.0 mol/L or less, more preferably 0.9 mol/L or less, and further preferably 0.8 mol/L or less (that is, preferably 0.0005 to 1.0 mol/L, more preferably 0.001 to 0.9 mol/L, further preferably 0.05 to 0.9 mol/L, and particularly preferably 0.05 to 0.8 mol/L).

It is also preferable to appropriately adjust the ratio between the metal M¹ ion concentration and the metal M² ion concentration described above, and the molar ratio of metal M² ion concentration/metal M¹ ion concentration (hereinafter referred to as M²/M¹ ratio) is preferably 0.1 to 1000. The M²/M¹ ratio is more preferably 0.5 or more, further preferably 3.0 or more, and even more preferably 5.0 or more, and is more preferably 700 or less, further preferably 300 or less, even further preferably 50 or less, and even more preferably 15 or less. By adjusting the M²/M¹ ratio or changing the metal species, the location of formation of the metal cyanocomplex in the oxide porous body can be controlled. That is, the M²/M¹ ratio is preferably 0.1 to 1000, more preferably 0.5 to 700, further preferably 3.0 to 300, even more preferably 5.0 to 50, and particularly preferably 5.0 to 15.

### (Method 2)

Another method for forming a metal cyanocomplex on the surface of or inside the oxide porous body is a method including: an impregnation step of preparing an aqueous solution Sa of the same raw material for M² as in the above method 1 (specifically, an aqueous solution in which salts of the raw material for M² are dissolved) and a solution Sb of a non-aqueous hydrophobic organic solvent containing the same raw material for M¹ as in the above method 1 (specifically, a solution in which salts of the raw material for M¹ are dissolved in the hydrophobic organic solvent), and impregnating at least a part of the oxide porous body with one of the aqueous solution Sa and the solution Sb; and a step of bringing a solution other than the solution used in the impregnation step, out of the aqueous solution Sa and the solution Sb, into contact with the part of the oxide porous body impregnated with one of the aqueous solution Sa and the solution Sb in the impregnation step. The part to be impregnated with one of the aqueous solution Sa and the solution Sb in the impregnation step is preferably the layer (S1) having the smallest average pore diameter or the layer having an average pore diameter of 0.5 µm or less. As described above, the solution to be used in the impregnation step may be the aqueous solution Sa or may be the solution Sb, but it is preferable that after at least a part of the oxide porous body is immersed in the solution Sb, the part of the oxide porous body immersed in the solution Sb is brought into contact the aqueous solution Sa of the same raw material for M² as in the above method 1. The aqueous solution Sa of the raw material for M² is specifically an aqueous solution of Aₚ[M²(CN)_{w}] (where p represents a number from 1 to 4, and A, M², and w are as described above). By using the solution Sb in which the raw material for M¹ is dissolved in the non-aqueous hydrophobic organic solvent and the aqueous solution Sa in which the raw material for M² is dissolved in water and bringing these solutions into contact with each other, the location where M¹ and M² react can be limited to the vicinity of the interface between the organic solvent and water. In particular, in the case where the oxide porous body has two or more layers having different pore diameters, it is preferable to impregnate at least the layer (S1) having the smallest average pore diameter or the layer having an average pore diameter of 0.5 µm or less in the oxide porous body with the solution Sb, and bring the layer (S1) or the layer having an average pore diameter of 0.5 µm or less, impregnated with the solution Sb, of the oxide porous body into contact with the aqueous solution Sa, and by doing so, the metal cyanocomplex represented by the above formula (1) can be uniformly formed inside or on the surface of the layer (S1) or the layer having an average pore diameter of 0.5 µm or less of the oxide porous body. In the method (2), it is more preferable that the layer (S1) has an average pore diameter of 0.5 µm or less.

As the non-aqueous hydrophobic solvent described above, organic solvents that are not miscible with water, for example, aliphatic monoalcohols having 5 or more carbon atoms such as pentanol, hexanol, heptanol, and octanol, aliphatic hydrocarbons such as hexane, and aromatic hydrocarbons such as benzene and toluene can be used. These solvents can be used individually, but two or more of these solvents can also be mixed and used.

In the method 2, the anions that form salts with the raw material for M¹ are preferably organic ions, and examples thereof include carboxylate ions such as CH₃COO⁻.

In the method 2, the cations that form salts with the raw material for M² may be, for example, sodium ions.

In the method 2, the concentration of metal M¹ ions in the hydrophobic solvent of the raw material for M¹ is preferably 0.0001 to 0.05 mol/L, more preferably 0.0003 to 0.01 mol/L, and further preferably 0.0005 to 0.005 mol/L.

In the method 2, the concentration of metal M² ions in the aqueous solution of the raw material for M² is preferably 0.001 to 0.5 mol/L, more preferably 0.005 to 0.3 mol/L, and further preferably 0.01 to 0.1 mol/L.

In the method 2, it is also preferable to appropriately adjust the ratio between the metal M¹ ion concentration and the metal M² ion concentration described above, and the molar ratio of metal M² ion concentration/metal M¹ ion concentration (hereinafter referred to as M²/M¹ ratio) is preferably 1 to 100, more preferably 10 to 80, further preferably 20 to 70, and particularly preferably 30 to 60.

After the oxide porous body immersed in the solution Sb is brought into contact with the aqueous solution Sa of the raw material for M², the oxide porous body may be allowed to stand for about 1 to 10 days, for example, then washed if necessary, and further dried.

### (Method 3)

Still another method for forming a metal cyanocomplex on the surface of or inside the oxide porous body is a method of impregnating at least a part of the oxide porous body with an aqueous solution of a metal cyanocomplex represented by Fe³⁺[Fe³⁺(CN)₆], and performing reduction treatment on the oxide porous body in which at least the part has been impregnated with the aqueous solution. In particular, in the case where the oxide porous body has two or more layers having different pore diameters, it is preferable to impregnate at least the layer (S1) having the smallest average pore diameter or the layer having an average pore diameter of 0.5 µm or less in the oxide porous body with the aqueous solution, and perform reduction treatment on the oxide porous body in which at least the layer (S1) having the smallest average pore diameter or the layer having an average pore diameter of 0.5 µm or less has been impregnated with the metal cyanocomplex. By doing so, a metal cyanocomplex represented by the following formula (1') can be uniformly formed inside or on the surface of the layer (S1) or the layer having an average pore diameter of 0.5 µm or less of the oxide porous body.

AₓM¹¹[M²¹(CN)₆]_{y}·zH₂O (1'),

where A represents one or more atoms selected from the group consisting of hydrogen, lithium, sodium, potassium, rubidium, cesium, and ammonium, M¹¹ and M²¹ are iron(III), x represents a number from 0 to 4, y represents a number from 0.1 to 2, and z represents a number from 0 to 6.

Fe³⁺[Fe³⁺(CN)₆] is obtained by reacting the anionic metal cyanocomplex, which is the raw material for M², and the cation of the metal M¹, which is the raw material for M¹, in water, and by making both metals corresponding to M¹ and M² into trivalent iron ions, Fe[Fe(CN)₆] can exist as an aqueous solution of Fe[Fe(CN)₆] without precipitation. Specifically, salts of the raw material for M² and salts of the raw material for M¹ may be dissolved in water and reacted.

After the layer (S1) or the layer having an average pore diameter of 0.5 µm or less is impregnated with the aqueous solution of Fe[Fe(CN)₆], reduction treatment is performed on the oxide porous body to reduce the surface of the layer (S1) or the surface of the layer having an average pore diameter of 0.5 µm or less, whereby a film of a metal cyanocomplex represented by AₓFe[Fe(CN)₆]_{y}·zH₂O can be formed on the surface of the layer (S1) or the surface of the layer having an average pore diameter of 0.5 µm or less. After the reduction treatment, it is preferable to perform washing treatment with water or the like to remove excess Fe[Fe(CN)₆].

The reduction method is not particularly limited, but examples thereof include reduction using a reducing agent or light, and preferably include reduction using hydrogen gas or the like and reduction using light including ultraviolet rays. Examples of reduction using hydrogen gas include drying the oxide porous body impregnated with the aqueous solution of Fe[Fe(CN)₆] in a hydrogen gas flow for about 1 to 10 days, and the like. In the case of reduction using light, the wavelength of the light is not particularly limited, but it is preferable to include light of 500 nm or less, it is more preferable to include light of 450 nm or less, it is further preferable to include light of 400 nm or less, and it is preferable to apply such light for about 10 to 180 minutes.

In the method 3, examples of the anions that form salts with the raw material for M¹ include inorganic ions such as Cl⁻, NO³⁻, and SO₄²⁻ and organic ions such as carboxylate ions and hydroxycarboxylate ions, and NO³⁻ or hydroxycarboxylate ions (particularly citrate ions) are preferable.

In the method 3, examples of the cations that form salts with the raw material for M² include hydrogen ions, lithium ions, sodium ions, potassium ions, rubidium ions, cesium ions, ammonium ions, etc., and potassium ions are preferable.

In the water in which the salts of the raw material for M² and the salts of the raw material for M¹ are reacted, it is preferable that the concentration of metal M¹ ions is 0.05 to 15 mass%, the concentration of metal M² ions is 0.001 to 8 mass%, and the mass ratio (M¹/M²) of metal M¹ ions to metal M² ions is 1.5 to 5, and it is more preferable that the concentration of metal M¹ ions is 0.1 to 10 mass%, the concentration of metal M² ions is 0.05 to 6 mass%, and the mass ratio (M¹/M²) of metal M¹ ions to metal M² ions is 1.5 to 5.

### 3. Ammonia separation method

The present invention also includes an ammonia separation method of selectively passing ammonia through the ammonia separation membrane described above from a mixed gas containing ammonia. By supplying the mixed gas containing ammonia from one surface of the ammonia separation membrane and creating a pressure difference or concentration difference between the one surface and the other surface of the ammonia separation membrane, ammonia is selectively passed through the other surface from the mixed gas containing ammonia.

With the ammonia separation method of the present invention, an ammonia separation coefficient S calculated by the following equation can be 1.5 or more, and is preferably 3.0 or more and more preferably 5.0 or more. The upper limit of the separation coefficient is in the case where only ammonia is passed completely, and in that case, the upper limit becomes infinite, but in practical use, the separation coefficient may be about 100,000 or less, and it is effective for separating ammonia even if the separation coefficient is 1000 or less or 100 or less.

Separation coefficient S = (ammonia concentration of gas after passing through separation membrane/nitrogen concentration of gas after passing through separation membrane)/(ammonia concentration of supplied mixed gas/nitrogen concentration of supplied mixed gas)

The proportion of ammonia in the mixed gas containing ammonia is, for example, 3 to 50 vol% and preferably 5 to 30 vol%. Examples of gases other than ammonia in the mixed gas include hydrogen and nitrogen, it is preferable that 50 vol% or more of nitrogen is contained in the mixed gas, and it is more preferable that 70 vol% or more of nitrogen is contained in the mixed gas.

In addition, in the ammonia separation membrane of the preferred embodiment, as described above, the layer (S1) having the smallest average pore diameter is an outermost layer on one side of the oxide porous body, and the metal cyanocomplex is formed inside the layer (S1) and/or adjacent to the layer (S1), and when ammonia is separated using such an ammonia separation membrane, it is preferable to supply a mixed gas containing ammonia from the side of the layer (S1) having the smallest average pore diameter.

This application claims priority to Japanese Patent Application No. 2022-078202 filed on May 11, 2022, the entire contents of which are incorporated herein by reference.

### EXAMPLES

The present invention will be described in more detail below by means of examples. The present invention is not limited by the following examples, and can also be carried out with appropriate modifications being made within the scope of the gist described above and below, and any of these modifications are included in the technical scope of the present invention.

### Example 1

Cobalt chloride (CoCl₂, raw material for M¹) and potassium hexacyanoferrate(III) (K₃[Fe(CN)₆], raw material for M²) were dissolved in water to prepare solutions with concentrations of 0.06 M and 0.6 M, respectively. When the metal cyanocomplex to be formed is represented by AₓM¹[M²(CN)_{w}]_{y·}zH₂O, Co corresponds to M¹, Fe corresponds to M², K corresponds to A, and the M²/M¹ ratio of the raw material for M² to the raw material for M¹ was 10.

Next, a cylindrical oxide porous body was produced in the following manner.

First, a cylindrical porous alumina tube having an outer diameter of 10 mm, an inner diameter of 7 mm, and a length of 10 cm was prepared. The outermost surface of the cylindrical porous alumina tube was a layer containing 90 mass% or more of α-alumina, and as a result of measuring a pore diameter thereof by a mercury intrusion method, the pore diameter was about 0.1 µm. Subsequently, an oxide porous body was obtained by: performing dip-coating of the cylindrical porous alumina tube using alumina sol (Alumina Sol-10A, manufactured by KAWAKEN Fine Chemicals Co., Ltd.) with both ends thereof plugged such that the alumina sol did not enter the inside of the tube; and performing heat treatment. As a result of measuring the pore diameter of the outermost layer of the obtained oxide porous body by a capillary condensation method, the pore diameter was about 8 nm. The outermost layer on the outer circumferential surface of the oxide porous body was a γ-alumina layer, and the thickness thereof was about 2 µm.

The cylindrical oxide porous body was immersed in the above cobalt chloride aqueous solution with the inside of the oxide porous body kept hollow by plugging one end of the cylindrical oxide porous body. The above potassium hexacyanoferrate(III) aqueous solution was added to the inside of the cylindrical oxide porous body. The cylindrical oxide porous body was allowed to stand in this state for 1 day, then unplugged, washed with water, and air-dried. By repeating these operations once more, an ammonia separation membrane, which was a cylindrical oxide porous body with a metal cyanocomplex formed, was produced. The formed metal cyanocomplex was K₃ₐ₋₂Co[Fe(CN)₆]_{a·}z¹H₂O (where a > 2/3).

The ammonia separation membrane produced in Example 1 was evaluated for ammonia separation performance by the following method.

### (1) Evaluation of ammonia separation performance

A mixed gas of ammonia and nitrogen (9.6 vol% of ammonia, 90.4 vol% of nitrogen) was supplied at 50 mL/min from the side surface of the cylindrical porous body. At this time, the differential pressure applied to the tube wall of the cylindrical porous body was adjusted to 100 kPa using a back pressure valve and a vacuum pump. The concentrations of ammonia and nitrogen in the gas having passed through the cylindrical porous body were calculated using a mass spectrometer (device name: BELMASS, Microtrac BEL Corporation), and the separation coefficient S was calculated according to the following equation.

S = (ammonia concentration of passed gas/nitrogen concentration of passed gas)/(ammonia concentration of supplied gas/nitrogen concentration of supplied gas)

The separation coefficient S of Example 1 was 3.7, and the ammonia separation membrane of the present invention was able to selectively separate ammonia from the mixed gas containing ammonia. On the other hand, a dispersion coefficient calculated assuming a Knudsen state was 1.3.

### Example 2

A sample was produced in the same manner as in Example 1, except that cobalt chloride was replaced with iron(III) nitrate 9-hydrate, potassium hexacyanoferrate(III) was replaced with sodium hexacyanoferrate(II), and the film formation (step of forming a metal cyanocomplex) was carried out only once. The formed metal cyanocomplex was Na_{4b-3}Fe[Fe(CN)₆]_{b}·z²H₂O (where b > 3/4).

### (2) Cross-sectional TEM observation and elemental analysis of ammonia separation membrane

TEM observation and elemental analysis by TEM-EDX were performed on the ammonia separation membranes of Example 1 and Example 2.

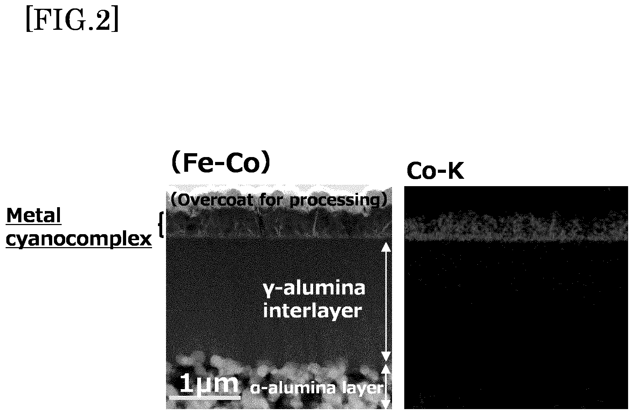

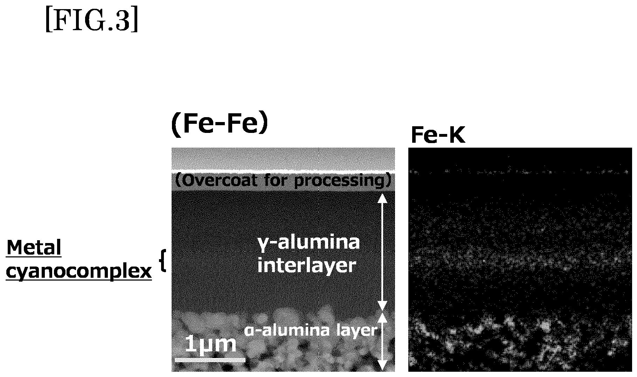

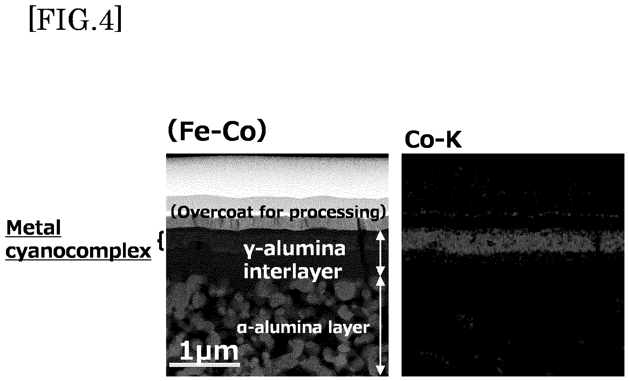

FIG. 2 and FIG. 3 show the results of the TEM observation and elemental analysis by TEM-EDX performed in (2) above. FIG. 4 shows an example of changing the location of formation of the metal cyanocomplex using the same raw materials as in Example 1. "Co-K" in FIG. 2 and FIG. 4 is EDX mapping attributed to the electron transition of Co to a K nucleus, and indicates the location of presence of Co. "Fe-K" in FIG. 3 is EDX mapping attributed to the electron transition of Fe to a K nucleus, and indicates the location of presence of Fe.

According to FIG. 2, the oxide porous body with the metal cyanocomplex formed, which was the ammonia separation membrane produced in Example 1, can be seen, and it can be seen that the metal cyanocomplex is formed on the layer having the smallest average pore diameter. In addition, according to FIG. 3, the oxide porous body with the metal cyanocomplex formed, which was the ammonia separation membrane produced in Example 2, can be seen, and it can be seen that the metal cyanocomplex is formed inside the layer having the smallest average pore diameter. Furthermore, from FIG. 4, it can be seen that the metal cyanocomplex having the same composition as in Example 1 is formed inside the layer having the smallest average pore diameter in the oxide porous body of the ammonia separation membrane.

### Example 3

Cobalt acetate ((CH₃COO)₂Co, M¹ raw material for M¹) was mixed with 1-octanol to prepare a solution with a concentration of 1 mM. Next, sodium hexacyanoferrate(II) (Na₄[Fe(CN)₆], raw material for M²) was dissolved in water to prepare a solution with a concentration of 0.05 M. When the metal cyanocomplex to be formed is represented by AₓM¹[M²(CN)_{w}]_{y}·zH₂O, Co corresponds to M¹, Fe corresponds to M², and Na corresponds to A.

An oxide porous body produced in the same manner as in Example 1 was immersed in the above 1-octanol solution of cobalt acetate to impregnate the oxide porous body with the 1-octanol solution of cobalt acetate, and was then taken out, and both ends of the oxide porous body were plugged. The plugged oxide porous body was immersed in the above sodium hexacyanoferrate(II) aqueous solution. The cylindrical oxide porous body was allowed to stand in this state for 5 days, then unplugged, washed with water, and air-dried to produce an ammonia separation membrane which was a cylindrical oxide porous body having a metal cyanocomplex formed . The formed metal cyanocomplex was Na_{3c-2}Co[Fe(CN)₆]_{c}·z³H₂O (where c > 2/3). It was also confirmed that in the ammonia separation membrane obtained in Example 3, the metal cyanocomplex was formed on the surface of or inside the layer having the smallest average pore diameter (i.e., γ-alumina layer having a pore diameter of 8 nm).

As a result of evaluating ammonia separation performance by the same method as in Example 1, the separation coefficient S of Example 3 was 9.7.

### Example 4

Iron(III) nitrate 9-hydrate (Fe(NO₃)₃·9H₂O, raw material for M¹) and potassium hexacyanoferrate(III) (K₃[Fe(CN)₆], raw material for M²) were dissolved in water to prepare a solution of their mixture so that concentrations were 0.01 M, respectively.

An oxide porous body produced in the same method as in Example 1 was immersed in the solution of the mixture to impregnate the oxide porous body with the solution of the mixture, then dried in a hydrogen gas flow for 5 days, and then washed with water to produce an ammonia separation membrane which was a cylindrical oxide porous body having a metal cyanocomplex formed. The formed metal cyanocomplex was K_{4d-3}Fe[Fe(CN)₆]_{d}·z⁴H₂O (where d > 3/4).

As a result of evaluating ammonia separation performance by the same method as in Example 1, the separation coefficient S of Example 4 was 16.

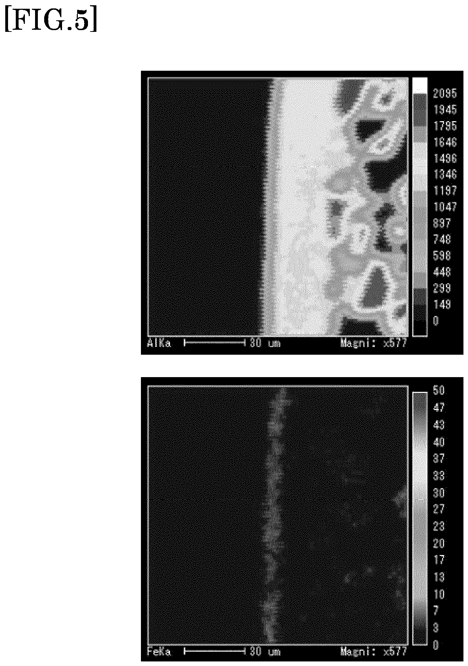

FIG. 5 shows the results of performing elemental analysis on the ammonia separation membrane obtained in Example 4 using an electron probe micro analyzer (EPMA). The upper side of FIG. 5 shows the distribution of Al, and the lower side of FIG. 5 is a result showing the distribution of Fe. The left side on the drawing sheet of FIG. 5 is the layer having the smallest average pore diameter (i.e., γ-alumina layer having a pore diameter of 8 nm), and a state where the metal cyanocomplex was formed in the vicinity of this γ-alumina layer could be observed.

### Example 5

Ammonium iron(III) citrate and potassium hexacyanoferrate(III) were dissolved in water to prepare a solution of their mixture so that concentrations were 2% and 1%, respectively.

An oxide porous body produced in the same method as in Example 1 was immersed in the solution of the mixture to impregnate the oxide porous body with the solution of the mixture, then irradiated with sunlight for 60 minutes while being rotated in the radial direction at a speed of 60 rpm, and then washed with water to produce an ammonia separation membrane which was a cylindrical oxide porous body having a metal cyanocomplex formed. The formed metal cyanocomplex was K₃ₑ₋₃Fe[Fe(CN)₆]ₑ·z⁵H₂O (where e > 1). It was also confirmed that in the ammonia separation membrane obtained in Example 5, the metal cyanocomplex was formed on the surface of or inside the layer having the smallest average pore diameter (i.e., γ-alumina layer having a pore diameter of 8 nm).

As a result of evaluating ammonia separation performance by the same method as in Example 1, the separation coefficient S of Example 5 was 15.

## Claims

1. An ammonia separation membrane comprising a metal cyanocomplex represented by the following formula (1) and an oxide porous body, wherein
a pore shape of the oxide porous body is irregular,
AₓM¹[M²(CN)_{w}]_{y}·zH₂O (1)
where
M¹ represents one or more metal atoms selected from the group consisting of vanadium, chromium, manganese, iron, ruthenium, cobalt, rhodium, nickel, palladium, platinum, copper, silver, zinc, lanthanum, europium, gadolinium, lutetium, barium, strontium, and calcium,
M² represents one or more metal atoms selected from the group consisting of vanadium, chromium, molybdenum, tungsten, manganese, iron, ruthenium, cobalt, nickel, platinum, and copper,
A represents one or more atoms selected from the group consisting of hydrogen, lithium, sodium, potassium, rubidium, cesium, and ammonium, and
x represents a number from 0 to 4, y represents a number from 0.1 to 2, z represents a number from 0 to 6, and w represents a number from 4 to 8.

2. The ammonia separation membrane according to claim 1, wherein the oxide porous body has two or more layers having different pore diameters.

3. The ammonia separation membrane according to claim 2, wherein
the oxide porous body has two or more layers having different pore diameters, and
the metal cyanocomplex is formed inside a layer (S1) having a smallest average pore diameter and/or adjacent to the layer (S1).

4. The ammonia separation membrane according to claim 3, wherein an outermost layer on one side of the oxide porous body is the layer (S1).

5. The ammonia separation membrane according to claim 3 or 4, wherein the layer (S1) has an average pore diameter of 0.5 µm or less.

6. The ammonia separation membrane according to claim 1 or 2, wherein the metal cyanocomplex is formed inside a layer, of the oxide porous body, having an average pore diameter of 0.5 µm or less and/or on a surface of a layer having an average pore diameter of 0.5 µm or less.

7. A method for producing an ammonia separation membrane having a metal cyanocomplex represented by the following formula (1) and an oxide porous body, wherein
the oxide porous body has an irregular pore shape and has two or more layers having different pore diameters, and
the method comprises:
an impregnation step of impregnating at least a layer (S1) having a smallest average pore diameter or a layer having an average pore diameter of 0.5 µm or less in the oxide porous body with one of an aqueous solution Sa containing Aₚ[M²(CN)_{w}] (where A represents one or more atoms selected from the group consisting of hydrogen, lithium, sodium, potassium, rubidium, cesium, and ammonium, M² represents one or more metal atoms selected from the group consisting of vanadium, chromium, molybdenum, tungsten, manganese, iron, ruthenium, cobalt, nickel, platinum, and copper, p represents a number from 1 to 4, and w represents a number from 4 to 8) and a solution Sb of a hydrophobic solvent containing M¹ which is one or more metals selected from the group consisting of vanadium, chromium, manganese, iron, ruthenium, cobalt, rhodium, nickel, palladium, platinum, copper, silver, zinc, lanthanum, europium, gadolinium, lutetium, barium, strontium, and calcium; and
a step of bringing a solution other than the solution used in the impregnation step, out of the aqueous solution Sa and the solution Sb, into contact with the layer (S1) having the smallest average pore diameter or the layer having an average pore diameter of 0.5 µm or less, of the oxide porous body, impregnated with one of the aqueous solution Sa and the solution Sb in the impregnation step,
AₓM¹[M²(CN)_{w}]_{y}·zH₂O (1),
where A, M¹, M², and w are the same as above, x represents a number from 0 to 4, y represents a number from 0.1 to 2, and z represents a number from 0 to 6.

8. A method for producing an ammonia separation membrane having a metal cyanocomplex represented by the following formula (1') and an oxide porous body, wherein
the oxide porous body has an irregular pore shape and has two or more layers having different pore diameters, and
the method comprises:
a step of impregnating at least a layer (S1) having a smallest average pore diameter or a layer having an average pore diameter of 0.5 µm or less in the oxide porous body with an aqueous solution of a metal cyanocomplex represented by Fe³⁺[Fe³⁺(CN)₆]; and
a step of performing reduction treatment on the oxide porous body impregnated with the aqueous solution of the metal cyanocomplex Fe³⁺[Fe³⁺(CN)₆],
AₓM¹¹[M²¹(CN)₆]_{y}·zH₂O (1'),
where A represents one or more atoms selected from the group consisting of hydrogen, lithium, sodium, potassium, rubidium, cesium, and ammonium, M¹¹ and M²¹ are iron(III), x represents a number from 0 to 4, y represent a number from 0.1 to 2, and z represents a number from 0 to 6.

9. The method according to claim 8, wherein the reduction treatment is treatment in a reducing gas atmosphere.

10. The method according to claim 8, wherein the reduction treatment is treatment by light.

11. An ammonia separation method of selectively passing ammonia through the ammonia separation membrane according to claim 1 or 2 from a mixed gas containing ammonia.
